# EUROPEAN PATENT APPLICATION

(11) **EP 2 763 293 A2**
(43) Date of publication of application: **06.08.2014**
(21) Application number: 14151950.4
(22) Date of filing: 21.01.2014
(51) Int. Cl.: H02K 9/06

(54) **Motor**

(30) Priority: 31.01.2013 JP 2013017893
(71) Applicant: Panasonic Corporation, Kadoma-shi Osaka 571-8501 (JP)
(72) Inventor: Mizuno, Mitsumasa, Chuo-ku, Osaka 540-6207 (JP); Yamada, Yutaka, Chuo-ku, Osaka 540-6207 (JP)
(74) Representative: Appelt, Christian W.

(57) **Abstract**

A motor (10) includes a rotor (28), a stator (25) that rotates the rotor (28) about a rotation shaft (30) of the rotor (28), a cooling fan (43) that rotates about the rotation shaft (30), and a rotation speed adjustment mechanism (70). The rotation speed adjustment mechanism (70) that adjusts a rotation speed of the cooling fan (43) so that the rotation speed of the cooling fan (43) conforms to a rotation speed of the rotation shaft (30) when the rotor (28) is rotating at an accelerating speed or a constant speed and so that the rotation speed of the cooling fan (43) becomes higher than the rotation speed of the rotation shaft (30) when the rotor (28) is decelerating.

## Description

The present disclosure relates to a motor including a cooling fan.

Japanese Laid-Open Patent Publication No. 3-103051 describes a motor including a rotor, a stator, and a cooling fan for cooling the motor. The stator rotates the rotor about a rotation shaft of the rotor. The cooling fan rotates about the rotation shaft of the rotor to cool the motor.

In a conventional motor, the cooling fan is coupled to a sub rotor, which is rotatably supported by a main rotor in a magnetic field generated by magnets in the stator. The cooling fan may rotate at a rotation speed that differs from the main rotor. For example, when the rotation load of the main rotor increases and lowers the rotation speed of the main rotor. The increase in the rotation load increases the amount of heat generated from the motor. In this situation, the sub rotor to which the cooling fan is attached is driven to rotate at a higher speed than the main rotor. The cooling fan that is rotated by the sub rotor at a higher speed than the main rotor sufficiently cools the motor.

In this motor, the sub rotor to which the cooling fan is coupled is discrete from the main rotor. Thus, the main rotor and the sub rotor are connected to a power supply by different electric wires. This makes the assembling of the motor complicated.

It is an object of the present invention to provide a motor that is easy to assemble and includes a cooling fan having a sufficient cooling effect even when the rotation load increases.

According to an aspect of the invention, a motor includes a rotor, a stator that rotates the rotor about a rotation shaft of the rotor, a cooling fan that rotates about the rotation shaft, and a rotation speed adjustment mechanism that adjusts a rotation speed of the cooling fan so that the rotation speed of the cooling fan conforms to a rotation speed of the rotation shaft when the rotor is rotating at an accelerating speed or a constant speed and so that the rotation speed of the cooling fan becomes higher than the rotation speed of the rotation shaft when the rotor is decelerating.

In an embodiment, the rotation speed adjustment mechanism includes a torque transmitting member that rotates integrally with the rotation shaft, and a switching member that switches the torque transmitting member between a state connected to the cooling fan in which torque is transmitted from the torque transmitting member to the cooling fan and a state disconnected from cooling fan in which torque is not transmitted from the torque transmitting member to the cooling fan. The switching member connects the torque transmitting member and the cooling fan when the rotor is rotating at an accelerating speed or a constant speed, and the switching member disconnects the torque transmitting member and the cooling fan when the rotor is decelerating.

In an embodiment, the torque transmitting member includes a torque transmitting surface that allows for transmission of torque from the torque transmitting member to the cooling fan through the switching member. The cooling fan includes a torque receiving surface that receives torque from the torque transmitting member through the switching member. The switching member is configured to allow for contact with the torque receiving surface that produces frictional force when the switching member is in contact with the torque transmitting surface.

In an embodiment, a first region and a second region are formed between the torque transmitting surface and the torque receiving surface. The switching member is in contact with both of the torque transmitting surface and the torque receiving surface when the switching member is located in the first region. The switching member is not in contact with at least either one of the torque transmitting surface and the torque receiving surface when the switching member is located in the second region.

In an embodiment, the motor includes a holding member that holds the switching member in the second region.

In an embodiment, the cooling fan includes a plurality of vanes, wherein each vane includes an inner portion and an outer portion, and the outer portion has a larger size in an axial direction of the rotation shaft than the inner portion.

In an embodiment, the cooling fan includes a plurality of vanes, wherein each vane includes an inner portion and an outer portion, and the outer portion is formed from a material having a greater specific gravity than the inner portion.

In an embodiment, the cooling fan includes a plurality of vanes, wherein each vane includes an inner portion and an outer portion, and a weight is fixed to the outer portions of the vanes.

In an embodiment, the rotation speed adjustment mechanism is arranged at an outer side of the rotation shaft and an inner side of the cooling fan.

In an embodiment, the motor includes a torque transmitting surface monolithically arranged on the rotation shaft, a torque receiving surface monolithically arranged on the cooling fan, and a roller compartment defined between the torque transmitting surface and the torque receiving surface. The roller compartment includes a torque transmitting position and a non-torque transmitting position. The rotation speed adjustment mechanism includes a roller that is arranged to be movable in the roller compartment, and the roller is moved between the torque transmitting position and the non-torque transmitting portion in accordance with centrifugal force. The roller is held between the torque transmitting surface and the torque receiving surface when located at the torque transmitting position. The roller is separated from at least either one of the torque transmitting surface and the torque receiving surface when located at the non-torque transmitting position.

Other aspects and advantages of the present invention will become apparent from the following description, taken in conjunction with the accompanying drawings, illustrating by way of example the principles of the invention.

The invention, together with objects and advantages thereof, may best be understood by reference to the following description of the presently preferred embodiments together with the accompanying drawings in which:
Fig. 1 is a cross-sectional diagram illustrating one embodiment of a motor;
Fig. 2 is a cross-sectional diagram of a cooling structure;
Fig. 3A is a cross-sectional diagram of the cooling structure when a torque transmitting member is connected to a cooling fan; and
Fig. 3B is a cross-sectional diagram of the cooling structure when the torque transmitting member is disconnected from the cooling fan.

One embodiment of a motor will now be described with reference to the drawings.

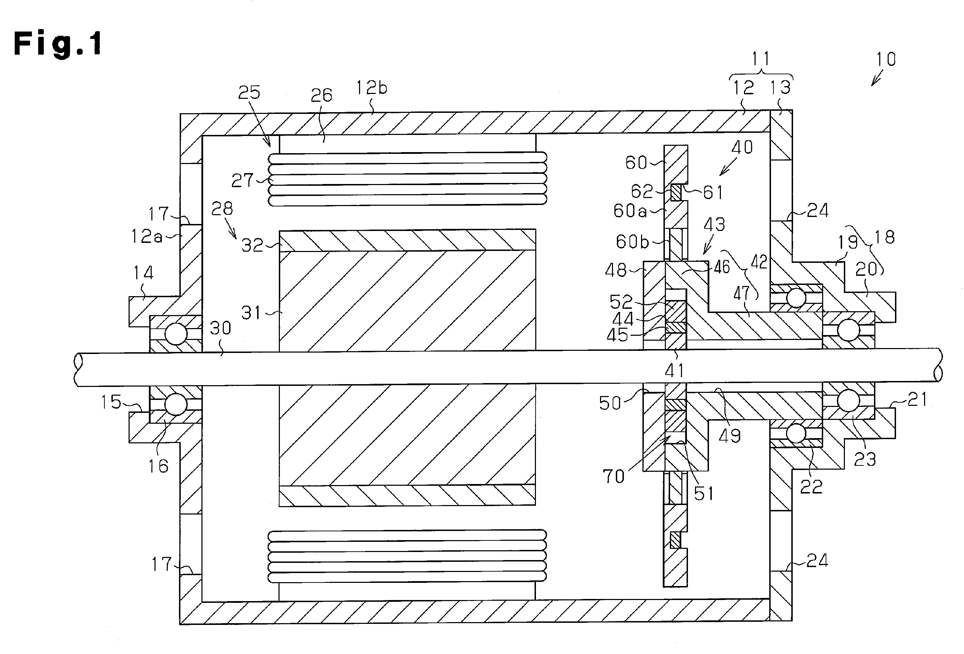

Referring to Fig. 1, a motor 10 according to one embodiment includes a housing 11 formed by a main body 12 and an end cap 13. The main body 12 is cylindrical and includes a bottom wall 12a and a side wall 12b. The end cap 13 is a circular plate that closes the open end of the main body 12. A tubular projection 14 projects from the housing 11 at a central portion of the bottom wall 12a. A shaft hole 15 extends into the housing 11 through a central portion of the tubular projection 14. A bearing 16 is held in the tubular projection 14. Ventilation holes 17 are arranged in the bottom wall 12a of the main body 12 around the tubular projection 14. The interior and exterior of the housing 11 are in communication through the ventilation holes 17.

A further tubular projection 18 projects from the housing 11 at a central portion of the end cap 13. The tubular projection 18 includes a first bearing retainer 19 and a second bearing retainer 20, which has a smaller inner diameter than the first bearing retainer 19. A shaft hole 21 extends into the housing 11 through a central portion of the second bearing retainer 20. The first and second bearing retainers 19 and 20 respectively hold bearings 22 and 23. Ventilation holes 24 are arranged in the end cap 13 around the tubular projection 18. The interior and exterior of the housing 11 are in communication through the ventilation holes 24.

The side wall 12b of the main body 12 includes an inner surface that supports a stator 25. The stator 25 includes a stator core 26 and coils 27, which are wound around the stator core 26. A rotor 28, which is rotated by stator 25, is arranged at the inner side of the stator 25. The rotor 28 includes a rotation shaft 30, which is supported to be rotatable by the bearings 16 and 23, an annular rotor core 31, which is press-fitted to the rotation shaft 30 from the outer side, and an annular permanent magnet 32, which is fixed to the outer surface of the rotor core 31. The permanent magnet 32 includes a plurality of poles arranged in certain angular intervals. The rotation shaft 30 has two opposite ends projecting out of the housing 11 through the shaft holes 15 and 21, respectively. A cooling mechanism 40 that cools the motor 10 is arranged on the rotation shaft 30 of the rotor 28, for example, between the rotor core 31 and the bearing 23.

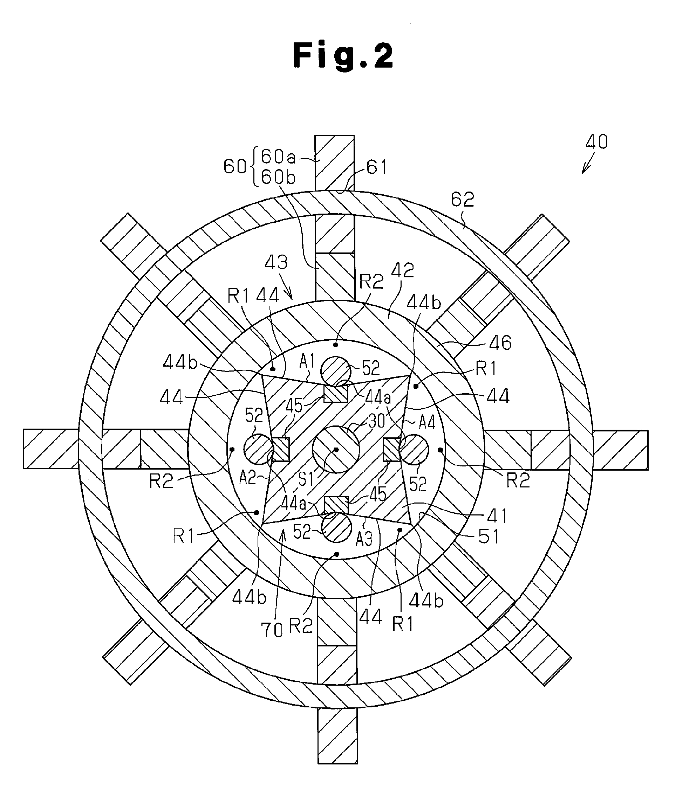

As illustrated in Figs. 1 and 2, the cooling mechanism 40 includes a torque transmitting member 41 and a cooling fan 43. The torque transmitting member 41 is fitted to and rotated integrally with the rotation shaft 30. The cooling fan 43 includes a torque transmitted member 42 arranged at the outer side of the torque transmitting member 41 and supported to be rotatable by the bearing 22. The torque transmitting member 41 may be, for example, a polygonal hollow body including a plurality of corners 44b.

As illustrated in Fig. 2, the torque transmitting member 41 is a polygonal hollow body including the corners 44b. In the preferred example, the torque transmitting member 41 has a tetragonal cross-section that is orthogonal to the rotation shaft 30. The torque transmitting member 41 includes side surfaces A1, A2, A3, and A4 that are inwardly recessed or bent toward the rotation shaft 30 and function as torque transmitting surfaces 44. Each of the side surfaces A1, A2, A3, and A4 of the torque transmitting member 41 includes a bottom portion 44a that is closest to the rotation shaft 30. A permanent magnet 45 that functions as a holding member is embedded in the bottom portion 44a.

As illustrated in Fig. 1, the torque transmitted member 42 includes a collar 46 and a sleeve 47, which extends along the rotation shaft 30. The collar 46 includes an inner surface that functions as a torque receiving surface 51. The collar 46 has an opening that is located at the opposite side of the sleeve 47 and closed by a cover 48, which has the shape of a circular plate. A shaft hole 49 extends through the collar 46 and the sleeve 47. A shaft hole 50 extends through the cover 48. The shaft holes 49 and 50 each have an inner diameter that is larger than the diameter of the rotation shaft 30. The rotation shaft 30 extends through the shaft holes 49 and 50 with a clearance provided between the rotation shaft 30 and the walls of the shaft holes 49 and 50. The bearing 22 supports the sleeve 47 of the torque transmitted member 42.

As illustrated in Fig. 2, a plurality of (four in the illustrated embodiment) rollers 52 are arranged between the torque transmitting surfaces 44 of the torque transmitting member 41 and the torque receiving surface 51 of the collar 46. Each roller 52 is arranged on one of the side surfaces A1 to A4 (torque transmitting surfaces 44) of the torque transmitting member 41. Further, each roller 52 is, for example, cylindrical. Preferably, the roller 52 is a component formed from a magnetic material such as steel and attracted to magnets.

The distance between each corner 44b of the torque transmitting member 41 and the rotation axis S1 of the rotation shaft 30 is less than the radius of the collar 46 of the torque transmitted member 42. This allows for the torque transmitted member 42 to be rotated about the rotation shaft 30 relative to the torque transmitting member 41 without the corners 44b of the torque transmitting member 41 interfering with the torque receiving surface 51 of the collar 46. Further, the distance between each corner 44b of the torque transmitting member 41 and the torque receiving surface 51 of the torque transmitted member 42 is less than the diameter of the rollers 52. Thus, the rollers 52 do not move through the gaps formed between the corners 44b of the torque transmitting member 41 and the torque receiving surface 51 of the torque transmitted member 42.

A roller compartment is defined between each torque transmitting surface 44 and the torque receiving surface 51. The roller compartment includes a first region R1 that corresponds to one corner 44b of the torque transmitting member 41 and a second region R2 that corresponds to the bottom portion 44a of the torque transmitting surface 44. Each roller 52 is movable in the corresponding roller compartment. When the roller 52 is located in the first region R1, the roller 52 is in contact with both of the torque transmitting surface 44 and the torque receiving surface 51. The distance between the bottom portion 44a in the torque transmitting surface 44 of the torque transmitting member 41 and the torque transmitted member 42 is greater than the diameter of the roller 52. Accordingly, when the roller 52 is located in the second region R2, the roller 52 is not in contact with at least either one of the torque transmitting surface 44 and the torque receiving surface 51.

A plurality of (eight in the illustrated embodiment) vanes 60 are coupled to the outer surface of the collar 46 of the torque transmitted member 42. Each vane 60 may be an elongated tetragonal resin plate extending linearly in the radial direction. Each vane 60 includes a distal portion, or outer portion 60a, and a basal portion, or inner portion 60b. As illustrated in Fig. 1, the outer portion 60a has a size in the axial direction of the rotation shaft 30 (thickness) that is greater than that of the inner portion 60b. Further, the outer portion 60a is formed from a resin material having a greater specific gravity than the inner portion 60b. The vanes 60 are arranged on the collar 46 at equal angular intervals. Further, the vanes 60 are opposed to the ventilation holes 24 of the end cap 13.

The outer portions 60a of the vanes 60 respectively includes grooves 61 extending along a hypothetical circle about the rotation shaft 30. A metal ring 62 is fixed to the grooves 61. The metal ring 62 connects the outer portions 60a of adjacent ones of the vanes 60. The metal ring 62 may be formed from a metal material having a greater specific gravity than the vanes 60. The metal ring 62 is one example of a weight.

The operation of the motor 10 will now be described.

When the rotation shaft 30 is still, the rollers 52 are attracted to and held by the permanent magnets 45 embedded in the torque transmitting member 41. More specifically, each roller 52 is located in the second region R2 where the roller 52 is not in contact with at least either one of the torque transmitting surface 44 and the torque receiving surface 51.

When the rotation shaft 30 starts to rotate, the torque transmitting member 41 rotates integrally with the rotation shaft 30. When the rotation shaft 30 is rotating at a relatively low speed, the torque transmitting member 41 is rotated integrally about the rotation shaft 30 with each roller 52 held by the corresponding permanent magnet 45.

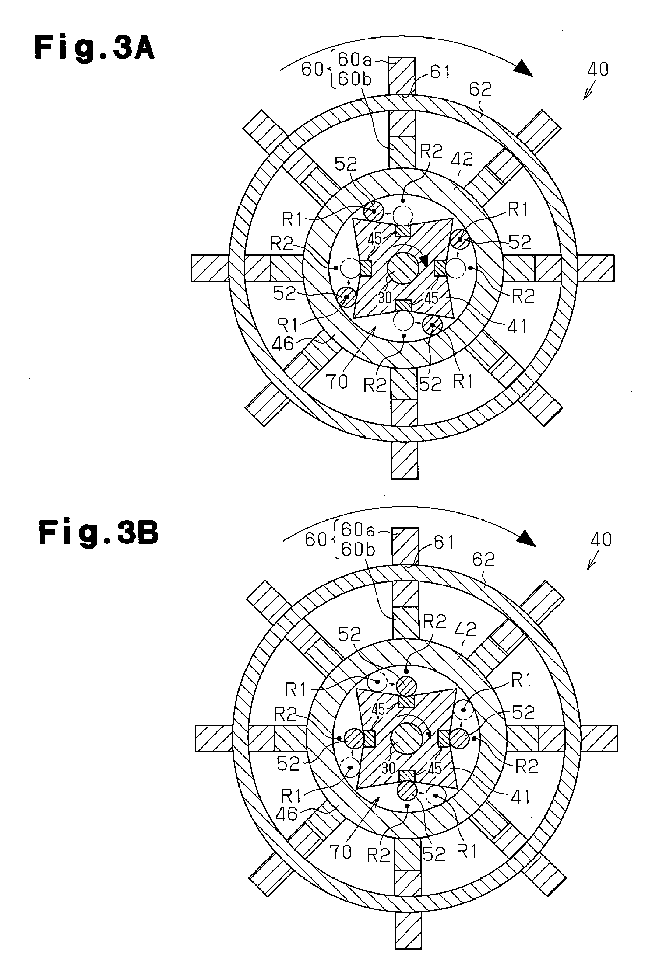

As the rotation speed of the rotation shaft 30 gradually increases, the centrifugal force applied to each roller 52 gradually increases. As a result, the rollers 52 move away from the bottom portions 44a in the torque transmitting surfaces 44 of the torque transmitting member 41 and toward the corners 44b against the magnetic holding force of the permanent magnets 45. Referring to Fig. 3A, when each roller 52 reaches the first region R1, the roller 52 contacts the torque transmitting surface 44 and receives frictional force from the torque receiving surface 51. Thus, the roller 52 transmits torque from the torque transmitting member 41 to the torque transmitted member 42. This connects the torque transmitting member 41 and the torque transmitted member 42. Under this situation, the torque of the rotation shaft 30 is transmitted via the torque transmitting surface 44 and the rollers 52 to the torque receiving surface 51. This rotates the vanes 60 together with the rotation shaft 30. In this manner, when the rotation of the rotor 28 is accelerated, the rotation speed of the cooling fan 43 conforms to the rotation speed of the rotation shaft 30.

The rotation of the vanes 60 generates a stream of air drawn into the housing 11 through the ventilation holes 24 and discharged out of the housing 11 from the ventilation holes 17. The stream of air cools the motor 10, in particular, the coils 27 and the like accommodated in the housing 11.

As the rotation shaft 30 rotates at a constant speed under the situation illustrated in Fig. 3A, the rollers 52 remain in contact with both of the torque transmitting surface 44 and the torque receiving surface 51. Thus, the torque transmitting member 41 and the torque transmitted member 42 do not rotate relatively to each other. In this manner, when the rotor 28 is rotating at a constant speed, the rotation speed of the cooling fan 43 remains in conformance with the rotation speed of the rotation shaft 30.

When, for example, the rotation load on the rotation shaft 30 increases from the situation illustrated in Fig. 3A and decelerates the rotation of the rotation shaft 30, the rotation speed of the torque transmitting member 41 decreases. The friction produced between the rollers 52 and the torque receiving surface 51 of the torque transmitted member 42, which rotates at a higher rotation speed than the torque transmitting member 41, and moves the rollers 52 forward in the rotation direction from the first regions R1. As a result, referring to Fig. 3B, the rollers 52 disconnect the torque transmitting member 41 from the torque transmitted member 42 (disconnected state). Since the deceleration of the torque transmitting member 41 is not transmitted to the torque transmitted member 42, the torque transmitted member 42 continues to rotate at a relatively high speed, while the rotation speed of the rotation shaft 30 decreases. The rollers 52 is one example of a switching member that switches the torque transmitting member 41 and the torque transmitted member 42 between a connected state and a disconnected state.

Even when the rotation of the rotation shaft 30 is decelerated, inertia continues to rotate the vanes 60 at a high speed. When the rotor 28 is decelerating, the cooling fan 43 is rotated at a higher rotation speed than the rotation shaft 30. In this respect, the torque transmitting member 41 and the rollers 52 function to form a rotation speed adjustment mechanism 70 that rotates the cooling fan 43 at a higher speed than the rotation shaft 30 when the rotor 28 is decelerating.

Referring to Fig. 3B, the permanent magnets 45 magnetically attract and hold the rollers 52 at the second regions R2. The rollers 52 located in the second regions R2 contact the torque transmitting member 41 but do not contact the torque receiving surface 51. This switches the torque transmitting member 41 and the torque transmitted member 42 to a disconnected state in a reliable manner.

The embodiment discussed above has the advantages described below.
(1) In the motor 10 that includes the rotation speed adjustment mechanism 70, when the rotor 28 is rotating at an accelerating speed or a constant speed, the rotation speed of the cooling fan 43 conforms to the rotation speed of the rotation shaft 30, which is rotated at a relatively high speed. Accordingly, the cooling fan 43 has a sufficient cooling efficiency. When the rotation of the rotor 28 is decelerated, the rotation speed of the cooling fan 43 is higher than the rotation speed of the rotation shaft 30. The deceleration of the rotation shaft 30 is not directly transmitted to the cooling fan 43. As a result, while the rotation shaft 30 is decelerated, inertia continues to rotate the cooling fan 43 at a relatively high speed. In this manner, the cooling fan 43 obtains sufficient cooling efficiency even when the rotation shaft 30 is decelerated.
   The cooling fan 43 is rotated in cooperation with the rotation shaft 30 when the rotor 28 is rotating at an accelerating speed or a constant speed. Further, the cooling fan 43 is rotated by inertia when the rotation of the rotor 28 decelerates. Thus, the motor 10 does not need an additional rotor that is coupled to the cooling fan 43 to rotate the cooling fan 43 at a rotation speed that differs from that of the rotation shaft 30. Further, the omission of an addition rotor also allows for the omission of an electric wire that would be connected to such a rotor. Accordingly, the motor 10 is easily assembled, and sufficient cooling efficiency is obtained by the cooling fan 43 when the rotation load of the rotation shaft 30 is increased. Further, the motor 10 does not need a drive source dedicated to drive and rotate the cooling fan 43 at a rotation speed that differs from the rotation shaft 30.
(2) When the rotor 28 is rotating at an accelerating speed or a constant speed, the rollers 52 connects the torque transmitting member 41 and the torque transmitted member 42 in a manner enabling the transmission of torque. As a result, the rotation speed of the cooling fan 43 conforms to the rotation speed of the rotation shaft 30, which rotates at a high speed, and the cooling fan 43 may obtain sufficient cooling efficiency. When the rotation of the rotor 28 is decelerated, the rollers 52 disconnect the torque transmitting member 41 from the torque transmitted member 42. As a result, even when the rotation speed of the rotation shaft 30 decreases, the cooling fan 43 continues to rotate at a high speed. Accordingly, even when the rotation load on the rotation shaft 30 increases and decelerates the rotation of the rotor 28, sufficient cooling efficiency may be obtained with the cooling fan 43.
(3) If the rollers 52 are in contact with the torque transmitting surfaces 44 of the torque transmitting member 41 while contacting and producing frictional force with the torque receiving surface 51 of the torque transmitted member 42, the rollers 52 are held between the torque transmitting surface 44 and the torque receiving surface 51 thereby connecting the torque transmitting member 41 and the torque transmitted member 42 in a manner enabling the transmission of torque. When rotation of the rotation shaft 30 is decelerated, the rollers 52 receive frictional force from the torque receiving surface 51 of the torque transmitted member 42. This moves the rollers 52 forward in the rotation direction of the torque transmitted member 42 and away from the torque receiving surface 51. Accordingly, the rollers 52 disconnect the torque transmitting member 41 and the torque transmitted member 42 thereby disabling the transmission of torque.
(4) When the rollers 52 move to the first regions R1, the torque transmitting member 41 and the torque transmitted member 42 are connected in a manner enabling the transmission of torque. When the rollers 52 move to the second region R2, the torque transmitting member 41 and the torque transmitted member 42 are disconnected in a manner disabling the transmission of torque. Accordingly, the transmission of torque from the torque transmitting member 41 to the torque transmitted member 42 is switched between an enabled state and a disabled state with a simple structure.
(5) When rotation of the rotor 28 is decelerated, the permanent magnets 45 hold the rollers 52 in the second region R2. This ensures that the torque transmitting member 41 and the torque transmitted member 42 remain disconnected. Accordingly, deceleration of the rotation shaft 30 does not directly decelerate the rotation of the cooling fan 43.
(6) The outer portion 60a of each vane 60 has a larger size in the axial direction of the rotation shaft 30 than the inner portion 60b. This allows for an increase in the rotational moment of inertia of the cooling fan 43, while reducing the weight of the cooling fan 43. Accordingly, even when the rotation speed of the rotation shaft 30 decreases, inertia may continuously rotate the light cooling fan 43 at a relatively high speed.
(7) The outer portion 60a of each vane 60 is formed from a material having a having a greater specific gravity than the inner portion 60b. This allows for an increase in the rotational moment of inertia of the cooling fan 43, while reducing the weight of the cooling fan 43. Accordingly, even when the rotation speed of the rotation shaft 30 decreases, inertia may continuously rotate the light cooling fan 43 at a relatively high speed.
(8) The metal ring 62 is fixed to the outer portions 60a of the vanes 60. Thus, while minimizing an increase in the weight of the cooling fan 43, the rotational moment of inertial of the cooling fan 43 may be increased. Accordingly, even when the rotation speed of the rotation shaft 30 decreases, inertia may continuously rotate the light cooling fan 43 at a relatively high speed.

It should be apparent to those skilled in the art that the present invention may be embodied in many other specific forms without departing from the spirit or scope of the invention. Particularly, it should be understood that the present invention may be embodied in the following forms.

In the illustrated embodiment, the metal ring 62 may be fixed to inner portions 60b of the vanes 60. Further, the weight fixed to the vanes 60 is not limited to the metal ring 62 and may have any form. The weight does not have to connect adjacent ones of the vanes 60. The weight fixed to the vanes 60 does not have to be formed from metal and may be formed from any material. However, to increase the moment of inertia of the cooling fan 43, the material of the weight preferably has a greater specific gravity than the material of the vanes 60.

In the illustrated embodiment, the weight that is fixed to the vanes 60 may be omitted from the cooling fan 43.

In the illustrated embodiment, the inner portions 60b and the outer portions 60a of the vanes 60 may be formed from the same material.

In the illustrated embodiment, the cooling fan 43 may be formed so that the size of the each vane in the axial direction of the rotation shaft 30 is uniform from the inner portion 60b to the outer portion 60a. In this case, the cooling fan 43 may be shaped so that each vane 60 has a width in the circumferential direction about the rotation shaft 30 that gradually increases from the inner portion 60b to the outer portion 60a. Alternatively, the cooling fan 43 may be shaped so that each vane has a width in the circumferential direction about the rotation shaft 30 that is uniform from the inner portion 60b to the outer portion 60a.

In the illustrated embodiment, the permanent magnets 45 that hold the rollers 52 in the second region R2 may be embedded in the torque receiving surface 51 of the torque transmitted member 42. Further, the holding member that holds each roller 52 in the second region R2 is not limited to the permanent magnet 45 and may be, for example, an electromagnet.

In the illustrated embodiment, the switching member may be a spherical body. Further, the spherical body may have the same diameter as the rollers 52 of the illustrated embodiment.

In the illustrated embodiment, the torque transmitting surface 44 does not necessarily have to be bent at an obtuse angle so as to be recessed toward the rotation shaft 30 and may be configured to be, for example, flat. More specifically, the torque transmitting surface may have any form as long as the first region R1, in which the roller 52 comes into contact with both of the torque transmitting surface 44 and the torque receiving surface 51, and the second region R2, in which the roller 52 comes into contact with at least with at least either one of the torque transmitting surface 44 and the torque receiving surface 51, are formed between the torque transmitting surface 44 and the torque receiving surface 51.

In the illustrated embodiment, the structure that switches the motor 10 between a connected state, in which the torque transmitting member 41 and the torque transmitted member 42 are connected to enable torque transmission, and a disconnected state, in which the torque transmitting member 41 and the torque transmitted member 42 are disconnected to disable torque transmission, is not limited to a centrifugal clutch and may be, for example, an electromagnetic clutch. In this case, the switching member may contact the outer surface of the torque transmitting member 41 and the inner surface of the torque transmitted member 42. However, the switching member may contact a surface extending in the radial direction of the rotation shaft 30 and arranged on each of the torque transmitting member 41 and the torque transmitted member 42.

The present examples and embodiments are to be considered as illustrative and not restrictive, and the invention is not to be limited to the details given herein, but may be modified within the scope and equivalence of the appended claims.

## Claims

1. A motor (10) including
a rotor (28),
a stator (25) that rotates the rotor (28) about a rotation shaft (30) of the rotor (28), and
a cooling fan (43) that rotates about the rotation shaft (30),
the motor (10) **being characterized by** a rotation speed adjustment mechanism (70) that adjusts a rotation speed of the cooling fan (43) so that the rotation speed of the cooling fan (43) conforms to a rotation speed of the rotation shaft (30) when the rotor (28) is rotating at an accelerating speed or a constant speed and so that the rotation speed of the cooling fan (43) becomes higher than the rotation speed of the rotation shaft (30) when the rotor (28) is decelerating.

2. The motor according to claim 1, **being characterized in that** the rotation speed adjustment mechanism (70) includes
a torque transmitting member (41) that rotates integrally with the rotation shaft (30), and
a switching member (52) that switches the torque transmitting member (41) between a state connected to the cooling fan (43) in which torque is transmitted from the torque transmitting member (41) to the cooling fan (43) and a state disconnected from cooling fan (43) in which torque is not transmitted from the torque transmitting member (41) to the cooling fan (43),
wherein the switching member (52) connects the torque transmitting member and the cooling fan when the rotor (28) is rotating at an accelerating speed or a constant speed, and the switching member (52) disconnects the torque transmitting member and the cooling fan when the rotor (28) is decelerating.

3. The motor (10) according to claim 2, **being characterized in that**
the torque transmitting member (41) includes a torque transmitting surface (44) that allows for transmission of torque from the torque transmitting member (41) to the cooling fan (43) through the switching member (52),
the cooling fan (43) includes a torque receiving surface (51) that receives torque from the torque transmitting member (41) through the switching member (52), and
the switching member (52) is configured to allow for contact with the torque receiving surface (51) that produces frictional force when the switching member (52) is in contact with the torque transmitting surface (44).

4. The motor (10) according to claim 3, **being characterized in that**
a first region (R1) and a second region (R2) are formed between the torque transmitting surface (44) and the torque receiving surface (51),
the switching member is in contact with both of the torque transmitting surface (44) and the torque receiving surface (51) when the switching member (52) is located in the first region (R1), and
the switching member is not in contact with at least either one of the torque transmitting surface (44) and the torque receiving surface (51) when the switching member (52) is located in the second region (R2).

5. The motor (10) according to claim 4, further **being characterized by** a holding member (45) that holds the switching member (52) in the second region (R2).

6. The motor (10) according to any one of the preceding claims, **being characterized in that** the cooling fan (43) includes a plurality of vanes, wherein each vane includes an inner portion (60b) and an outer portion (60a), and the outer portion (60a) has a larger size in an axial direction of the rotation shaft (30) than the inner portion (60b).

7. The motor (10) according to any one of the preceding claims, **being characterized in that** the cooling fan (43) includes a plurality of vanes, wherein each vane includes an inner portion (60b) and an outer portion (60a), and the outer portion (60a) is formed from a material having a greater specific gravity than the inner portion (60b).

8. The motor (10) according to any one of the preceding claims, **being characterized in that** the cooling fan (43) includes a plurality of vanes, wherein each vane includes an inner portion (60b) and an outer portion (60a), and a weight (62) is fixed to the outer portions (60a) of the vanes.

9. The motor (10) according to any one of the preceding claims, **being characterized in that** the rotation speed adjustment mechanism (70) is arranged at an outer side of the rotation shaft (30) and an inner side of the cooling fan (43).

10. The motor (10) according to any one of the preceding claims, **being characterized by**
a torque transmitting surface (44) monolithically arranged on the rotation shaft (30),
a torque receiving surface (51) monolithically arranged on the cooling fan (43), and
a roller compartment defined between the torque transmitting surface (44) and the torque receiving surface (51), wherein the roller compartment includes a torque transmitting position and a non-torque transmitting position,
wherein the rotation speed adjustment mechanism (70) includes a roller (52) that is arranged to be movable in the roller compartment, and the roller is moved between the torque transmitting position (R1) and the non-torque transmitting portion (R2) in accordance with centrifugal force,
the roller (52) is held between the torque transmitting surface (44) and the torque receiving surface (51) when located at the torque transmitting position (R1 and
the roller (52) is separated from at least either one of the torque transmitting surface (44) and the torque receiving surface (51) when located at the non-torque transmitting position (R2).
